# EUROPÄISCHE PATENTANMELDUNG

(11) **EP 1 348 916 A2**
(43) Veröffentlichungstag der Anmeldung: **01.10.2003**
(21) Anmeldenummer: 03005509.9
(22) Anmeldetag: 11.03.2003
(51) Int. Cl.: F24J 2/52, H01L 31/042

(54) **Befestigungsvorrichtung für Bauteile, wie Kollektoren**

(30) Priorität: 28.03.2002 DE 20204963 U
(71) Anmelder: SCHÜCO International KG, 33609 Bielefeld (DE)
(72) Erfinder: Löwenstein, Volko, 33739 Bielefeld (DE); Wiggers, Melanie, 32657 Lemgo (DE)
(74) Vertreter: Specht, Peter, Dipl.-Phys.

(57) **Zusammenfassung**

Eine Befestigungsvorrichtung für Bauteile, insbesondere Kollektoren, auf Dächern, mit einem Dachanker (6'), der zum Hintergreifen einer Dachlatte und zur Auflage des Bauteiles ausgelegt ist, wobei der Dachanker (6') mit wenigstens einer Hohlkammer (15, 16, 17) versehen ist.

## Beschreibung

Die Erfindung betrifft eine Befestigungsvorrichtung nach dem Oberbegriff des Anspruches 1.

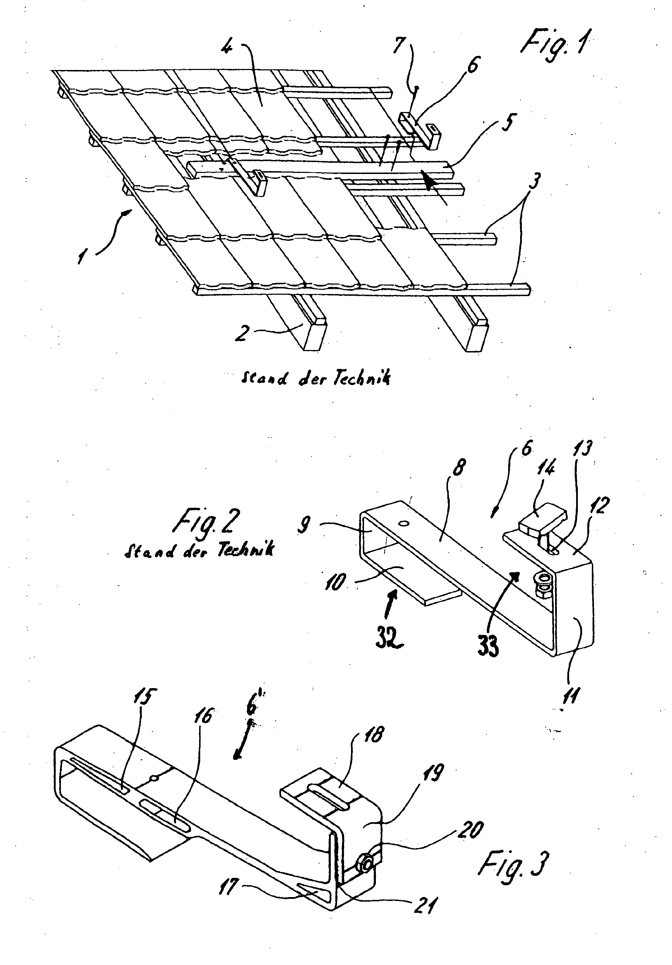

Als Dachanker ausgebildete Befestigungsvorrichtungen dieser Art sind an sich bekannt. Sie bestehen im allgemeinen - wie in Figur 2 dargestellt - aus Metallschienen, die an ihren beiden Enden zu den U-förmigen Bereichen umgebogen sind, von denen der eine zum Hintergreifen einer Dachlatte und der andere direkt als Auflage für das Bauteil oder als Auflage für eine Dachschiene dient, auf welcher dann das Bauteil befestigt wird.

Die Montage der Dachanker ist denkbar einfach. Hierzu werden einige Dachziegel entfernt, so dass der winklige Dachanker einfach hinter eine der vorhandenen oder zusätzlich angebrachten Dachlatten gehakt werden kann. Die Kröpfung der Dachanker ist derart den Dachziegeln angepasst, dass ein Dachziegel den in die Dachlatte eingehängten Bereich des Dachanker abdeckt und das Dach wieder dicht verschließt. Ein zweiter abgewinkelter Bereich schaut aus den Dachziegeln hervor und dient zur Montage des anzubringenden Bauteils.

Diese Art der Montage hat sich an sich bewährt. Problematisch ist aber die geringe Stabilität des Dachankers, der sich unter hohen Lasten relativ leicht durchbiegt. Da die Dachanker in der Regel als Biegeteile aus Stahl gefertigt sind, neigen sie zudem einerseits zur Korrosion und sind andererseits relativ teuer.

Bekannt sind auch zweiteilige Stahldachanker, bei denen eine Höhenverstellung des Auflagebereiches für den Kollektor möglich ist, wobei zwei Verstellschrauben zum Einsatz kommen, was zu einem relativ hohen Kosten- und Montageaufwand führt.

Die Erfindung hat die Aufgabe, die gattungsgemäße Befestigungsvorrichtung derart weiterzuentwickeln, dass auf einfache konstruktive Weise eine verbesserte Statik erreicht wird.

Die Erfindung löst diese Aufgabe durch den Gegenstand des Anspruches 1. Danach ist der Dachanker mit wenigstens einer Hohlkammer versehen, was die Statik ohne nennenswerten konstruktiven Aufwand auf einfache Weise erhöht.

Bevorzugt sind die Hohlkammern im Bereich des Längsschenkels ausgebildet, um den Dachanker oder -anker gezielt in diesem Bereich zu verstärken.

Besonders bevorzugt ist der zweite, zur Auflage von Dachschienen oder Kollektoren dienende U-förmige Bereich zweiteilig ausgebildet, um eine Höhenverstellbarkeit der Auflagefläche für das Bauteil realisieren zu können. Vorteilhaft sind dabei ein senkrecht zum Längsschenkel verlaufender Schenkel und ein hieran zu befestigender Schenkel eines Winkels mit miteinander verrastbaren, verstellbaren Querverzahnungen versehen. Als vorteilhaft hervorzuheben ist die hier verbesserte Verstellbarkeit durch die Anordnung der Querverzahnung, die eine rastbare Verstellung und eine Verdrehsicherheit mit nur einer Schraube ermöglichen. Hierdurch wird die Montagezeit verkürzt.

Hergestellt wird der Dachanker vorzugsweise als Strangpreßprofil aus Leichtmetall, was eine wirtschaftliche Herstellung ermöglicht und Probleme durch Rost vermeidet.

Weitere vorteilhafte Ausgestaltungen sind den übrigen Unteransprüchen zu entnehmen.

Nachfolgend wird die Erfindung anhand von Ausführungsbeispielen unter Bezug auf die Zeichnungen näher beschrieben. Es zeigt:
- Figur 1: einen Teilbereich eines Dachstuhles, an dessen Dachlatten Dachanker befestigt werden;
- Figur 2: einen bekannten Dachanker;
- Figur 3: eine perspektivische Ansicht eines erfindungsgemäßen Dachankers und
- Figur 4: eine Seitenansicht des Dachankers aus Figur 3.

Figur 1 zeigt einen Teilbereich eines Dachstuhls aus Sparren 2 und Dachlatten 3, wobei die Sparren 2 vom Dachfrist zur Traufe abwärts verlaufen und wobei auf den Sparren 2 horizontal die Dachlatten 3 angeordnet sind.

An den Dachlatten 3 sind die Ziegel 4 angehängt, die auf den Dachlatten 3 einander überlappend aufliegen. Der Dachstuhlaufbau ist rein beispielhaft zu verstehen. Es ist prinzipiell auch ein anderer Dachstuhlaufbau oder eine andere Bedeckung, z.B. aus Schieferplatten oder Stroh, denkbar, solange die Möglichkeit zum Befestigen der Dachanker gegeben ist.

An den quer verlaufenden Dachlatten 3 werden die Befestigungsvorrichtungen montiert. Hierzu werden einige der Dachziegel 4 zunächst entfernt und es wird bei Bedarf eine zusätzliche Dachlatte 5 zwischen den übrigen Dachlatten 3 angebracht, falls das Raster der Kollektoren nicht mit dem Raster der Dachlatten 3 übereinstimmt. Sodann werden die Dachanker 6 der Befestigungsvorrichtung hinter die Dachlatte 5 gehakt und dort mit einer Schraube 7 gesichert.

Nach der Montage wird das Dach 1 mit den Ziegeln 4 wieder verschlossen, so daß die Ziegel 4 auf der Dachlatte 5 und dem Dachanker 6 aufliegen. Lediglich ein zweiter Bereich des Dachankers 6 schaut unter den Ziegeln hervor und dient zur Befestigung von auf dem Dach anzubringenden Bauteilen wie Kollektoren.

Der in Figur 2 näher dargestellte Dachanker weist einen mittleren, strebenartigen Längsschenkel 8 auf, dessen beide Enden jeweils zu U-förmigen Bereichen umgeformt sind, wobei der erste U-förmige Bereich 32 zum Einhängen des Dachankers 6 auf einer Dachlatte 3 oder 5 dient und der zweite U-förmige Bereich 33 die Auflagefläche für Dachschienen oder Kollektoren aufweist.

Der erste U-förmige Bereich wird aus dem einen Ende des Längsschenkels 8 sowie einem hierzu senkrecht verlaufenden zweiten Schenkel 9 und einem wiederum parallel zum Längsschenkel 8 verlaufenden dritten Schenkel 10 gebildet. Dieser erste U-förmige Bereich 32 ist so ausgebildet, daß die Dachlatten 3 oder 5 formschlüssig umgriffen werden.

Der zweite am gegenüberliegenden Ende des Längsschenkels 8 angeordnete U-förmige Bereich 33 besteht aus dem zweiten Ende des Längsschenkels 8 sowie einem hierzu senkrecht verlaufenden vierten Schenkel 11 und einem wiederum parallel zum Längsschenkel 8 verlaufenden fünften Auflageschenkel 12.

Dieser zweite U-förmige Bereich ragt aus den Dachpfannen nach oben vor, wobei der parallel zum Längsschenkel 8 verlaufende fünfte Schenkel 12 als Auflagefläche für Dachschienen oder aber zur direkten Montage von Kollektoren dient.

Ein Langloch 13 im fünften Schenkel 12 ermöglicht einen Toleranzausgleich bei der Befestigung des Kollektors. So kann durch das Langloch 13 ein Befestigungsmittel 14 wie eine Schraube gesetzt werden, die in eine Nut einer Dachschiene oder direkt in einen Befestigungspunkt eines Kollektors eingreift.

Problematisch ist, daß die Dachanker des Standes der Technik relativ instabil sind und sich insbesondere bei großer Belastung leicht durchbiegen. Schwachpunkte sind insbesondere der relativ lange Längsschenkel 8 als auch die Kröpfung zum senkrecht zum Schenkel 8 verlaufenden Schenkel 11.

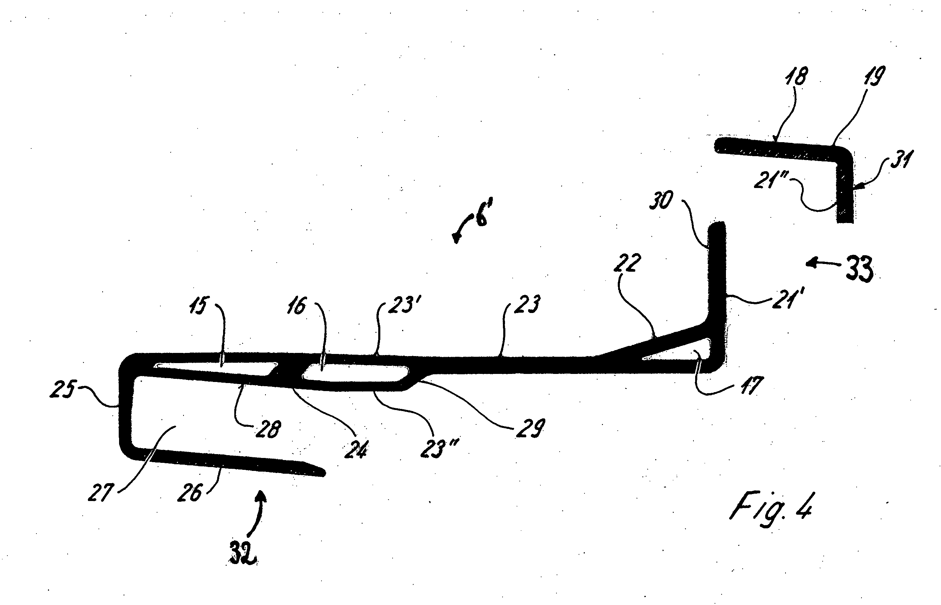

Der erfindungsgemäße Dachanker 6' in Fig. 3 und 4 weist wiederum einen mittleren Längsschenkel 23 auf, an dessen beiden Enden jeweils in voneinander abgewandter Richtung U-förmige Bereiche ausgebildet sind. Der erste U-förmige Bereich 32 besteht aus dem einen Ende des Längsschenkels 23, einem hierzu senkrecht ausgerichteten zweiten Schenkel 25 sowie einem hierzu wiederum senkrecht ausgerichteten, parallel zum zweiten Schenkel verlaufenden dritten Schenkel 26. Dieser erste U-förmige Bereich 32 dient wie beim Stand der Technik dazu, den Dachanker 6' an einer Dachlatte 3 oder 5 durch Einhängen zu befestigen (Ausnehmung 27 des ersten U-förmigen Bereiches).

Ausgehend vom Eckbereich zwischen dem Längsschenkel 23 und dem zweiten Schenkel 25 teilt sich der Längsschenkel 23 über ca. die Hälfte seiner Länge in zwei spitzwinklig zueinander verlaufende Stege 23' und 23" auf, welche über Diagonalstege 24 und 29 miteinander verbunden sind, so daß zwischen den beiden Stegen 23' und 23" sowie den Diagonalstegen 24 und 29 bzw. zur Ecke zum Schenkel 25 hin Hohlkammern 15 und 16 ausgebildet werden. Diese Hohlkammern führen zu einer erheblichen Verbesserung der Statik des Längsschenkels 23 und sichern ihn gegen ein Durchknicken.

Eine weitere Hohlkammer 17 ist an dem vom ersten U-förmigen Bereich abgewandten Ende des Längsschenkels 23 ausgebildet. Hier steht ein vierter Schenkel 30 senkrecht vom Ende des Längsschenkels 23 ab, wobei ein Diagonalsteg 22 zwischen dem vierten Schenkel 30 und dem Längsschenkel 23 die Hohlkammer 17 zum Längsschenkel 23 und zum vierten Schenkel 30 hin begrenzt, die für eine erhöhte Stabilität des Dachankers im zweiten U-förmigen Bereich 33 sorgt.

Im übrigen ist der Dachanker 6' nach Fig. 4 in seinem zweiten U-förmigen Bereich 33 nicht einteilig sondern zweiteilig ausgebildet, d.h. der weitere parallel zum Längsschenkel 23 verlaufende Auflageschenkel 18 wird von dem Ende eines Winkels 19 gebildet, der einen weiteren Schenkel 31 aufweist, der am senkrecht zum Längsschenkel 23 verlaufenden Schenkel 30 befestigbar ist.

Hierbei sind an den einander zugewandten Seiten der Schenkel 30 und 31 jeweils Querverzahnungen 21' und 21" ausgebildet, welche beim Zusammensetzen der beiden Teile rastend ineinandergreifen, wobei die Schenkel 30 und 31 ergänzend mittels einer als Schraube ausgebildeten Befestigungseinrichtung 20 miteinander verschraubt werden. Der Schenkel 30 weist dabei ein Langloch auf (hier nicht dargestellt), wodurch der Winkel 19 höhenverstellbar ist.

Die Lastabtragung des Dachankers 6' geschieht u.a. über die Auflage 28 an dem der Dachlatte zugewandten Steg 23" des Längsschenkels 23, welche im Raum 27 des ersten U-förmigen Bereiches 32 zur Aufnahme der Dachlatte liegt. Die Anordnung der Diagonalstege 24 und 29 im Bereich oberhalb und vorzugsweise leicht seitlich der Dachlatte optimiert die Lastabtragung.

Zu erwähnen ist, daß der erfindungsgemäße Dachanker 6' und der Winkel 19 bevorzugt als Strangpreßprofile aus Leichtmetall gefertigt werden.

### Bezugszeichenliste

- 1: Dachstuhl
- 2: Sparren
- 3: Dachlatte
- 4: Ziegel
- 5: Dachlatte
- 6: Dachanker
- 7: Schraube
- 8: Längsschenkel
- 9: Schenkel
- 10: Schenkel
- 11: Schenkel
- 12: Auflageschenkel
- 13: Langloch
- 14: Befestigungsmittel
- 15: Hohlkammer
- 16: Hohlkammer
- 17: Hohlkammer
- 18: Auflageschenkel
- 19: Winkel
- 20: Befestigung
- 21: 21', 21" Verzahnung
- 22: Steg
- 23: Längsschenkel; 23', 23" Schenkel
- 24: Steg
- 25: Schenkel
- 26: Schenkel
- 27: Raum
- 28: Auflage
- 29: Steg
- 30: Schenkel
- 31: Schenkel
- 32: erster U-förmiger Bereich
- 33: zweiter U-förmiger Bereich

## Patentansprüche

1. Befestigungsvorrichtung für Bauteile, insbesondere Kollektoren, auf Dächern, mit einem Dachanker (6'), der zum Hintergreifen einer Dachlatte und zur Auflage des Bauteiles ausgelegt ist, **dadurch gekennzeichnet, daß** der Dachanker (6') mit wenigstens einer Hohlkammer (15, 16, 17) versehen ist.

2. Befestigungsvorrichtung nach Anspruch 1, **dadurch gekennzeichnet, daß** der Dachanker (6') einen strebenartigen Längssteg (23) aufweist, an dessen beiden gegenüberliegenden Enden in voneinander abgewandter Richtung U-förmige, hakenartige Bereiche (32, 33) ausgebildet sind, von denen der erste U-förmige Bereich (32) zum Hintergreifen der Dachlatte (3, 5) und der zweite U-förmige Bereich (33) zur Auflage der Dachschiene oder zur direkten Auflage des Bauteiles, insbesondere des Kollektors ausgelegt ist.

3. Befestigungsvorrichtung nach Anspruch 1 oder 2, **dadurch gekennzeichnet, daß** mehrere der Hohlkammern (15, 16, 17) im Bereich des Längsschenkels (23) ausgebildet sind.

4. Befestigungsvorrichtung nach einem der vorstehenden Ansprüche, **dadurch gekennzeichnet, daß** mindestens eine der Hohlkammern (15, 16, 17) zwischen einem Ende des Längsschenkels (23), einem weiteren, zum Längsschenkel senkrecht verlaufenden vierten Schenkel (30) und einem Diagonalsteg (22) zwischen dem Längsschenkel (23) und dem vierten Schenkel (30) ausgebildet ist.

5. Befestigungsvorrichtung nach einem der vorstehenden Ansprüche, **dadurch gekennzeichnet, daß** der Längsschenkel (23) wenigstens abschnittsweise aus zwei parallel spitzwinklig zueinander verlaufenden Stegen (23, 23") besteht, die über Diagonal- oder Querstege (24, 29) miteinander verbunden sind.

6. Befestigungsvorrichtung nach einem der vorstehenden Ansprüche, **dadurch gekennzeichnet, daß** der zweite, zur Auflage von Dachschienen oder Kollektoren dienende U-förmige Bereich (33) mehrteilig ausgebildet ist.

7. Befestigungsvorrichtung nach einem der vorstehenden Ansprüche, **dadurch gekennzeichnet, daß** der zweite U-förmige Bereich (33) aus dem Längsschenkel (23), dem einstückig hiermit verbundenen, senkrecht zum Längsschenkel verlaufenden vierten Schenkel (30) sowie einem separaten Winkel (19) besteht, der einen im montierten Zustand parallel zum Längsschenkel verlaufenden Auflageschenkel (18) sowie einen hierzu senkrecht verlaufenden Schenkel (31) zur Befestigung am Schenkel (30) aufweist.

8. Befestigungsvorrichtung nach einem der vorstehenden Ansprüche oder nach dem Oberbegriff des Anspruchs 1, **dadurch gekennzeichnet, daß** der senkrecht zum Längsschenkel verlaufende Schenkel (30) und der hieran zu befestigende Schenkel (31) des Winkels (19) mit miteinander verrastbaren, relativ zueinander höhenverstellbaren Querverzahnungen (21) versehen sind.

9. Befestigungsvorrichtung nach einem der vorstehenden Ansprüche, **dadurch gekennzeichnet, daß** der Auflageschenkel (18) zur Auflage des Kollektors oder der Dachschiene mit einem Langloch (13) versehen ist.

10. Befestigungsvorrichtung nach einem der vorstehenden Ansprüche, **dadurch gekennzeichnet, daß** der Dachanker (6') und/oder der Winkel (19) als Strangpressprofil(e) aus Leichtmetall ausgebildet ist/sind.
